# EUROPEAN PATENT APPLICATION

(11) **EP 2 485 483 A1**
(43) Date of publication of application: **08.08.2012**
(21) Application number: 10820088.2
(22) Date of filing: 16.09.2010
(51) Int. Cl.: H04N 7/16, H04N 5/445, H04N 7/173

(54) **DISPLAY DEVICE**

(30) Priority: 29.09.2009 JP 2009223979
(71) Applicant: Panasonic Corporation, Kadoma-shi Osaka 571-8501 (JP)
(72) Inventor: TSUJI, Atsuhiro c/o Panasonic Corporation, Osaka-shi, Osaka 540-6207 (JP); KIMURA, Kazuhito c/o Panasonic Corporation, Osaka-shi, Osaka 540-6207 (JP)
(74) Representative: Kügele, Bernhard
(86) International application number: PCT/JP2010/005657
(87) International publication number: WO 2011/039962

(57) **Abstract**

To provide a display device capable of reliably displaying emergency signal information without disturbing a viewer. In order to solve the problem, a display device (100) which receives, as at least one of a broadcast signal and communication data, a target signal including a video signal and an additional information signal, and displays the target signal information includes: display units (108, 109); detecting units (111, 113) which detect whether an external display device is connected to the display device (100); and a display control unit (112) which, when the detecting units detect that the external display device is connected to the display device (100), causes the display unit to display the information of a first signal that is at least a part of the target signal, and causes the external display device to display the information of a second signal that is the remaining part of the target signal.

## Description

### [Technical Field]

The present invention relates to display devices which display information represented by multiplexed signals, and in particular relates to a digital television broadcast receiving device, and a device for receiving a program that is distributed using a multi-cast technique in communication technology, and more specifically relates to a display device which performs a display method suitable for a viewing environment.

### [Background Art]

In the digital television broadcasting of which provisions for broadcasting operation etc. are described in Patent Literature (PTL) 1, it is possible to multiplex, in a single transport stream (TS), program data (a video signal and an audio signal which represent a video that is normally viewed by a viewer), a subtitle signal representing information that is attached to the program data, an emergency signal etc. representing information that is not attached to the program data, and transmit the transport stream. This multiplexed structure in the TS is defined in the ISO/IEC IS 13818-1 International Standard, MPEG-2 Systems.

Examples of such an emergency signal include the standardized standard ATSC A/51-63 (ATSC) of the next generation terrestrial broadcasting in the US. According to this, in case of a natural disaster such as an earthquake, wind and flood damage, or any other abnormal emergency (hereinafter referred to as an emergency), it is possible to multiplex, in program data, an emergency signal that is in the form of a text signal and an audio signal and is different from a set of a video signal, a text signal, and an audio signal representing a video that is normally viewed by a viewer when a station is selected.

Some of the receiving devices which receive a multiplexed TS are configured to be capable of multiplexing, into a received video signal, visualized information of a subtitle signal included in a received emergency signal and displaying the multiplexed data, according to a viewer's instruction or a predetermined setting. Some of the other receiving devices are intended to always multiplex an emergency signal into a video signal and display the multiplexed data irrespective of a viewer's instruction or a predetermined setting because such an emergency signal should be preferentially recognized by the viewer over any other signals.

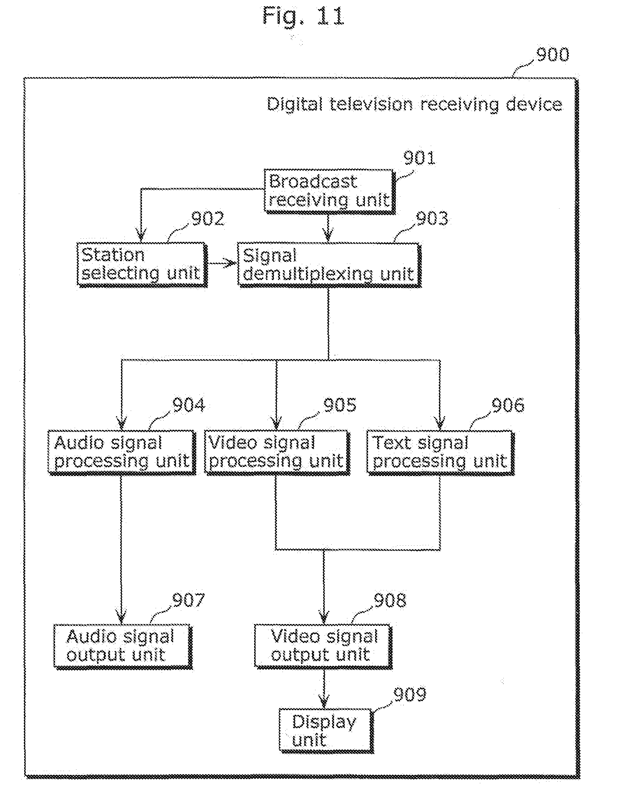

Here, operations performed by a conventional digital television receiving device 900 are schematically described with reference to Fig. 11. Fig. 11 is a block diagram showing a structure of the conventional digital television receiving device.

In Fig. 11, the digital television receiving device 900 includes a broadcast receiving unit 901, a station selecting unit 902, a signal demultiplexing unit 903, an audio signal processing unit 904, a video signal processing unit 905, a text signal processing unit 906, an audio signal output unit 907, a video signal output unit 908, and a display unit 909.

The broadcast receiving unit 901 receives an RF signal (broadcast signal), demodulates it into a digital signal. The broadcast receiving unit 901 outputs a control signal to the station selecting unit 902, and outputs a demodulated digital signal to the signal demultiplexing unit 903.

The station selecting unit 902 determines identification information defined in a TS in order to identify a signal to be processed, based on the control signal input from the broadcast receiving unit 901, and outputs the determined identification information to the signal demultiplexing unit 903.

Based on the identification information output by the station selecting unit 902, the signal demultiplexing unit 903 demultiplexes the demodulated signal output by the broadcast receiving unit 901 to extract an audio signal, a video signal, and a text signal representing text etc. that should be processed. Furthermore, the signal demultiplexing unit 903 outputs the audio signal, the video signal, and the text signal to the audio signal processing unit 904, the video signal processing unit 905, and the text signal processing unit 906, respectively.

The audio signal processing unit 904 transforms the audio signal input from the signal demulitplexing unit 903 into an analog audio signal. The analog audio signal is output as a sound from the audio signal output unit 907.

The video signal processing unit 905 transforms the video signal input from the signal demulitplexing unit 903 into an analog video signal. Likewise, the text signal processing unit 906 transforms the text signal input from the signal demulitplexing unit 903 into an analog video signal.

These video signals are output after the multiplexing by the video signal output unit 908, and are displayed on the display unit 909.

In the digital television receiving device 900 configured as described above, an emergency signal is a signal that should be recognized by a viewer most preferentially. However, displaying such an emergency signal entails problems as indicated below.

Problem 1: No information represented by an emergency signal is displayed while a video from an external device is being displayed on the digital television receiving device 900, for example, while a video game is being played.

Problem 2: No information represented by an emergency signal is displayed when the digital television receiving device 900 is OFF (not supplied with electric power).

Problem 3: Information represented by an emergency signal partly hides a video that the viewer would like to view or leads to reduction in the size of the video. Particularly, an unnecessary emergency signal impairs the benefit of viewing the video (video program) while the information of the unnecessary emergency signal is continuously displayed for a certain period.

A conceivable method to solve Problem 1 is a method of displaying information of an emergency signal even while a video from an external device is being displayed.

For example, PTL 1 discloses a method that is for use in a case where a video is input from an external device. The method is intended to extract identification information including an emergency signal and automatically synthesize, in the video that is being displayed, an instruction for specifying a station to be selected and a message obtained from the emergency signal.

A solution to Problem 2 is to make it possible to demultiplex an emergency signal from a broadcast signal by supplying electric power to the broadcast receiving unit 901, the station selecting unit 902, and the signal demultiplexing unit 903, even when a main electric power is OFF. Accordingly, a method of connecting (turning ON) the main electric power is conceivable in the case where the emergency signal is demultiplexed. PTL 2 discloses such a method performed in a CATV receiving terminal.

A conceivable method to solve Problem 3 is a method of avoiding displaying the information of an emergency signal that is deemed to be ineffective, considering that the efficacy of the emergency signal decreases as time elapses in a time-shift reproduction of a recorded data. More specifically, PTL 3 discloses a method of controlling reproduction of an emergency signal in a time-shift reproduction, based on the difference between a broadcast time and a current reproduction time.

However, none of PTL 1, PTL 2, and PTL 3 solves all of the aforementioned Problems 1 to 3. For example, as for Problem 3, the method disclosed in PTL 3 is effective only in the case of a time-shift reproduction of a recorded program, and thus does not produce any effects when a broadcast program is being viewed in real time.

In addition to such an emergency signal, a subtitle signal also hides the original video (examples of such a subtitle signal includes a signal for displaying subtitles in a multi-language audio program and a text signal for displaying subtitles etc. to help hearing-disabled people). However, the method disclosed in PTL 3 entails a problem that displayed information of a subtitle signal is erased in some cases although it is essential for a viewer even in the case of a time-shift reproduction of a recorded program.

On the other hand, another technique has been conceived which is for enhancing the convenience for the user by displaying plural signals on another display unit. For example, PTL 4 discloses a method of displaying a signal that is highly urgent to a driver onto a second display unit other than a first display unit detected by a viewing direction detector in a display device inside a car, and displaying the fact on the first display unit.

The application of the method disclosed in PTL 4 to the digital television receiving device 900 makes it possible to check an emergency signal by using the other display unit (the second display unit) in addition to the originally provided display unit in the digital television receiving device 900. Furthermore, the viewer can view the video that the viewer would like to view originally without being disturbed by the display of the emergency signal information.

In other words, the viewer can determine the importance to him/her by checking the signal information displayed on the second display unit at his/her own will, and in the case where he/she determines that the signal information is of low importance to him/her, he/she can continuously view the video (video program) without being disturbed by the display of the emergency signal information.

In other words, using such a second display unit in the digital television receiving device 900 makes it possible to solve Problem 1 and Problem 3 at the same time.

### [Citation List]

### [Patent Literature]

[PTL 1]
   Japanese Laid-open Patent Application Publication No. 2003-209761
[PTL 2]
   Japanese Laid-open Patent Application Publication No. 2001-186493
[PTL 3]
   Japanese Laid-open Patent Application Publication No. 11(1999)-155112
[PTL 4]
   Japanese Laid-open Patent Application Publication No. 2007-145310

### [Non Patent Literature]

[NPL 1]
   "Provisions for Terrestrial Digital Television Broadcasting Operation: Technical Information ARIBTR-B14" (Association of Radio Industries and Businesses)

### [Summary of Invention]

### [Technical Problem]

However, simply using a second display unit in a digital television receiving device 900 produces a load on a viewer to control a connection state of the second display unit, and thus the user may miss display of the necessary information represented by a signal such as an emergency signal.

In particular, using a mobile display device etc. as the second display unit is advantageous to a user in terms of enhancement in the convenience for the user and reduction in the cost. Here, it is highly likely that connection/disconnection operations are frequently repeated using the mobile display device as the second display unit.

This implementation entails a problem of increasing the possibility that the viewer misses the information of the signal output on the second display device as the result of a trouble caused, for example, in the case where the second display unit is not actually connected although the user was tried to connect it or in the opposite case where the second display unit is still connected although the user was tried to disconnect it.

The present invention has been conceived in view of the above-described problems, and has an object to provide display devices that are capable of reliably displaying information of a subtitle signal and an emergency signal, without disturbing a viewer of a digital television broadcast, in such a manner that the following requirements (1) to (3) are concurrently satisfied.

(1) To display the information of a subtitle signal and an emergency signal on a display without hiding the video of a video program that the viewer would like to view.

(2) To display the information of a subtitle signal and an emergency signal on a display without affecting the original video display size of the video of the program that the viewer would like to view originally.

(3) To prevent the viewer from missing a subtitle signal and an emergency signal that are essential.

### [Solution to Problem]

A display device according to an aspect of the present invention includes: a display unit configured to display information represented by a target signal including (i) a video signal and (ii) an additional information signal; a detecting unit configured to detect whether or not an external display device is connected to the display device; and a display control unit configured to cause the external display device to display a part of the information represented by the target signal, when the detecting unit detects that the external display device is connected to the display device.

This structure allows, in a state where the external display device can be utilized, a viewer to view a video program that the viewer would like to view in the original video display size even when subtitles and information represented by a subtitle signal and an emergency signal are displayed without allowing such information to hide the video program that the viewer would like to view.

Furthermore, this structure allows the detecting unit to automatically detect whether the external display device is connected to the display device. When the detecting unit detects that the external display device is connected to the display device, the display control unit can appropriately control the display destinations of the information represented by the video signal, subtitle signal, and emergency signal by using both the display unit included in the display device and the external display device, so that the viewer does not miss the essential information of the subtitle signal and emergency signal.

In addition, the display control unit may be configured to cause the external display device to display information represented by the additional information signal included in the target signal, when the detecting unit detects that the external display device is connected to the display device.

In addition, the detecting unit may be configured to obtain functional information indicating a type of a signal indicating information that can be displayed by the external display device connected to the display device, and the display control unit may be configured to cause the external display device to display the part of the information represented by the target signal, based on the functional information.

More specifically, the detecting unit may be configured to obtain the functional information from the external display device.

In addition, the display control unit may be configured to detect whether or not each of the signals included in the target signal is indicated in the functional information, and, in the case where at least one of the signals is found to be indicated by the detection, cause the external display device to display information represented by the at least one signal found to be indicated by the detection.

With this structure, it is possible to cause the external display device to preferentially display the signal information that can be displayed by the external display device so as to restrict signal information to be displayed on the display unit, thereby making it possible to cause the external display device to reliably display the information represented by the subtitle signal and emergency signal without disturbing the viewer.

In addition, the display control unit may be configured to cause the display unit to display information represented by the target signal, when the detecting unit detects that the external display device is not connected to the display device.

According to this structure, the display control unit transmits the target signal to the external display device only when the external display device is connected to the display device. Thus, it is possible to prevent the viewer from missing the displayed information of an emergency signal etc. as a result that the necessary emergency signal etc. is transmitted to the external display device only due to, for example, inappropriate setting by the viewer.

In addition, the display device may further include a station selecting unit configured to output identification information for demultiplexing the video signal and the additional information signal from the target signal.

The display device according to the aspect of the present invention further includes an electric power source control unit configured to detect whether a current conductive state is either (a) a normal conductive state in which electric power is supplied normally or (b) a standby state in which electric power is supplied at least to the detecting unit and the display control unit, the electric power being less than the electric power in the normal conductive state, wherein, in the case where: the electric power control unit detects that the current conductive state is the standby state; and the detecting unit detects that the external display device is connected to the display device, the display control unit is configured to cause the external display device to display information represented by the additional information signal.

More specifically, in the case where: the station selecting unit detects that the identification information includes information indicating that the additional information signal is an emergency signal; the electric power source control unit detects that the current conductive state is the standby state; and the detecting unit detects that the external display device is not connected to the display device, the electric power source control unit may be configured to switch the current conductive state from the standby state to the normal conductive state.

With this structure, it is possible to immediately display necessary information when the external display device is connected to the display device, even when the display device transits from a standby state to a normal conductive state, and thus it takes some time for information of an emergency signal etc. to be displayed. Furthermore, it is possible to suppress the amount of electric power consumption by preferentially utilizing the external display device that consumes less electric power.

In addition, the additional information signal may include at least one of subtitle information, emergency information, and advertisement information.

In addition, the functional information may include at least one of a character code, a message ID corresponding to a specific message defined in advance, and an SWF (Small Web Format or Shockwave Flash).

A display device according to another aspect of the present invention displays information represented by a target signal, and includes: a display unit; a communication unit; and a control unit, wherein, in the case where the communication unit obtains a control signal from another display device, the communication unit is configured to output the obtained control signal to the control unit, and output, to the other display device, a response signal corresponding to the control signal output from the control unit, the control signal being one of (a) a connection detection signal for detecting whether or not the display device is currently being connected to the other display device and (b) a query for display capability that is executed to obtain functional information indicating a type of a target signal representing information that can be displayed by the display device, and the control unit is configured to: output, as the response signal, a signal indicating that the display device is currently being connected to the other display device, to the communication unit, when the control signal is the connection detection signal; and output the functional information as the response signal, to the communication unit, when the control signal is the query for display capability.

With this structure, the other display device can detect whether or not the display device is currently being connected to the other display device by transmitting the connection detection signal. Furthermore, the other display device can obtain functional information of the display device by transmitting the query for display capability.

More specifically, the functional information may include at least one of a character code, a message ID corresponding to a specific message defined in advance, and an SWF (Small Web Format or Shockwave Flash).

### [Advantageous Effects of Invention]

A display device according to the present invention allows, in a state where the external display device (external display) can be utilized, a viewer to view a video program that the viewer would like to view in the original video display size even when subtitle information and information of an emergency signal are displayed such that the information do not hide the video program that the viewer would like to view.

Furthermore, this structure allows the display device to automatically detect whether the external display device is connected to the display device. Furthermore, when the detecting unit detects that the external display device is connected to the display device, the display device can display the information of the subtitle signal and emergency signal essential to the viewer, by determining the signal that should be displayed on the display unit of the display device and the signal that should be displayed on the external display device, so that the viewer does not miss the essential information of the subtitle signal and emergency signal.

### [Brief Description of Drawings]

[Fig. 1]

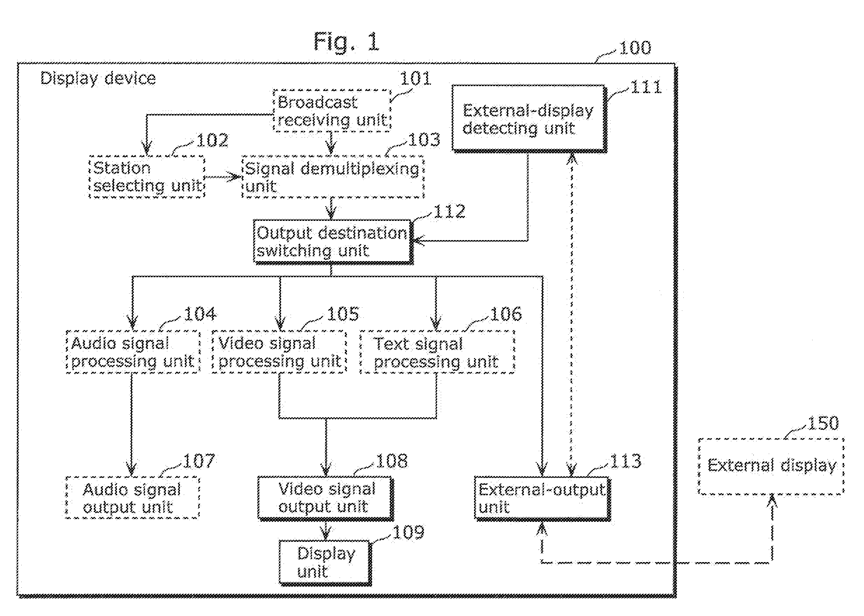

   Fig. 1 is a block diagram showing a structure of a display device according to Embodiment 1 of the present invention.
[Fig. 2]

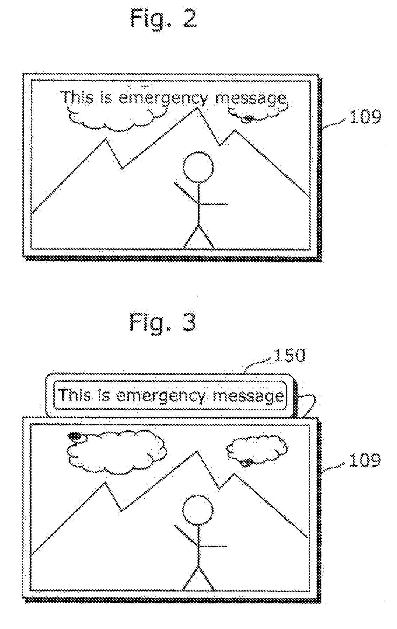

   Fig. 2 is a diagram showing an exemplary display in the case where no external display is connected to the display device according to Embodiment 1 of the present invention.
[Fig. 3]
   Fig. 3 is a diagram showing an exemplary display in the case where an external display is connected to the display device according to Embodiment 1 of the present invention.
[Fig. 4]

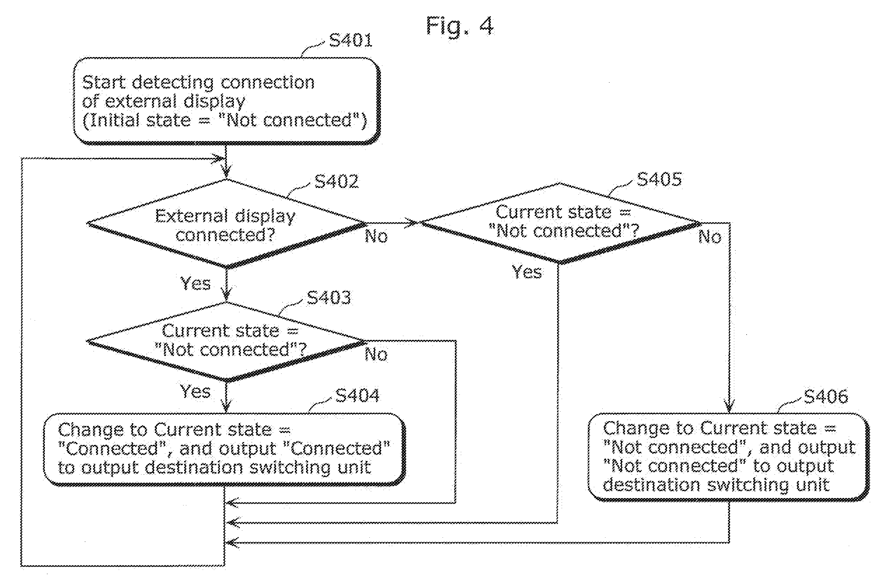

   Fig. 4 is a flowchart of an operation procedure taken by an external-display detecting unit of the display device according to Embodiment 1 of the present invention.
[Fig. 5]

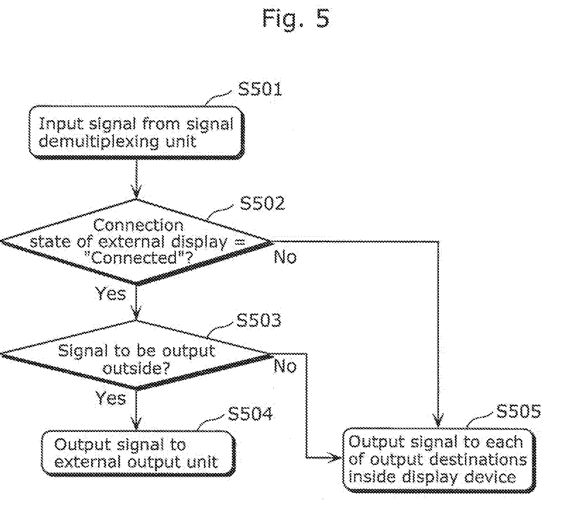

   Fig. 5 is a flowchart of an operation procedure that is taken by an output destination switching unit of the display device according to Embodiment 1 of the present invention in order to switch output destinations additionally considering the display capability of the external display.
[Fig. 6]

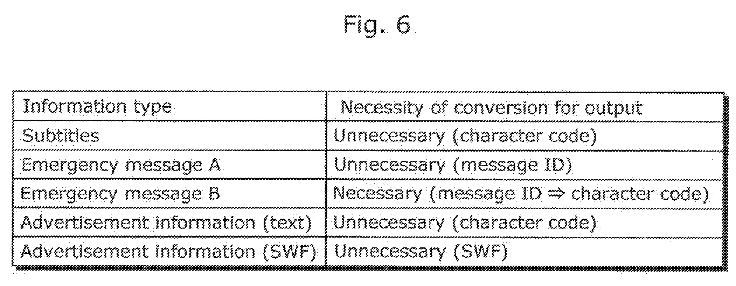

   Fig. 6 is a diagram showing an exemplary output destination switching table that is used by the output destination switching unit according to Embodiment 1 of the present invention in order to detect whether or not an obtained signal is a target signal to be output outside.
[Fig. 7]

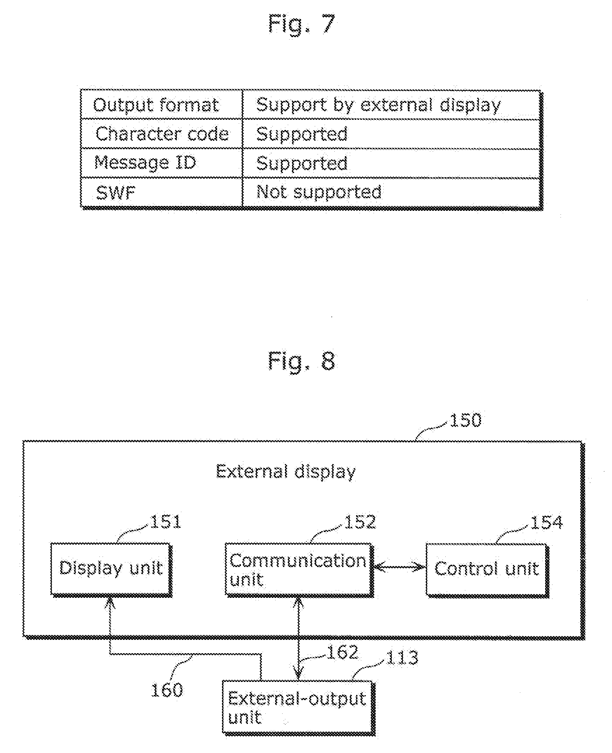

   Fig. 7 is a diagram showing an exemplary association table of output formats and supports by the external display according to Embodiment 1 of the present invention.
[Fig. 8]
   Fig. 8 is a block diagram showing functional blocks of the external display according to Embodiment 1 of the present invention.
[Fig. 9]

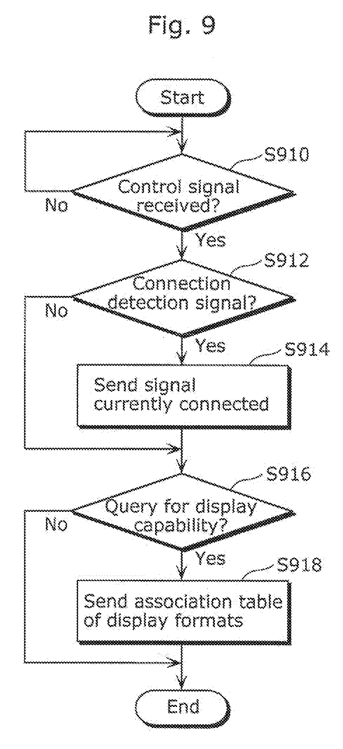

   Fig. 9 is a flowchart of processes performed by the external display according to Embodiment 1 of the present invention.
[Fig. 10]

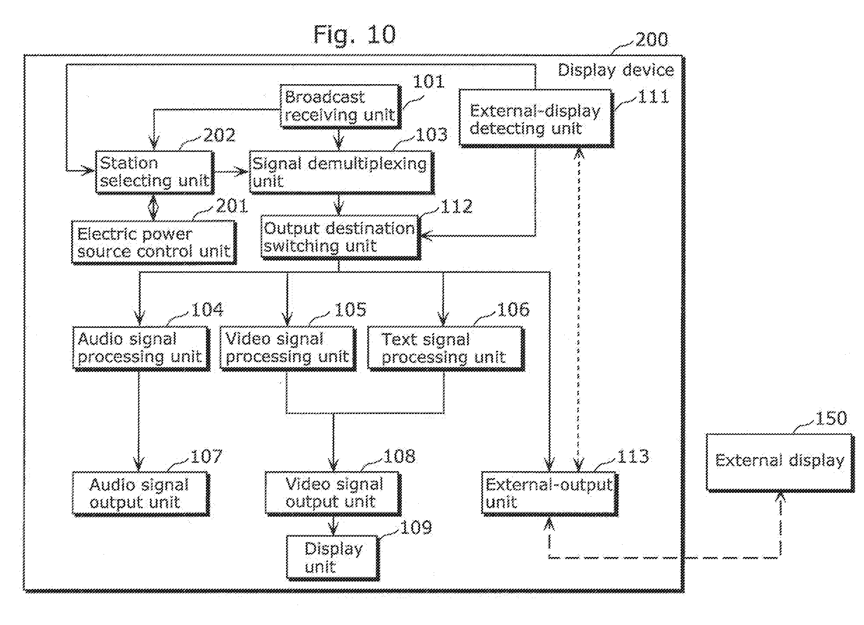

   Fig. 10 is a block diagram showing a structure of a display device according to Embodiment 2 of the present invention.
[Fig. 11]
   Fig. 11 is a block diagram showing a structure of a conventional digital television receiving device.
[Fig. 12]

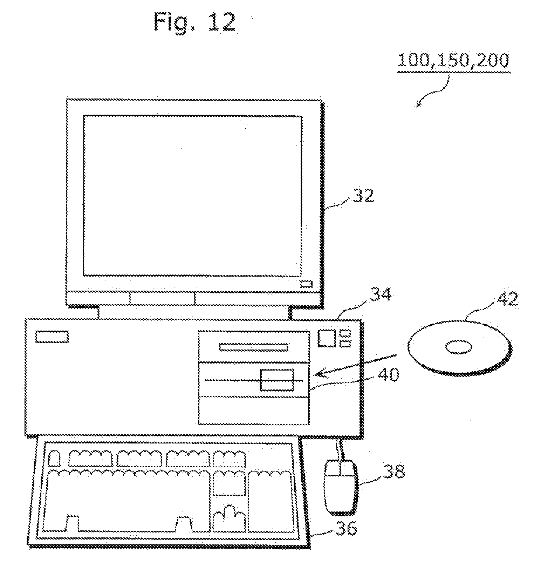

   Fig. 12 is an external view of an exemplary computer system including any one of the display devices according to Embodiments 1 and 2 of the present invention.
[Fig. 13]

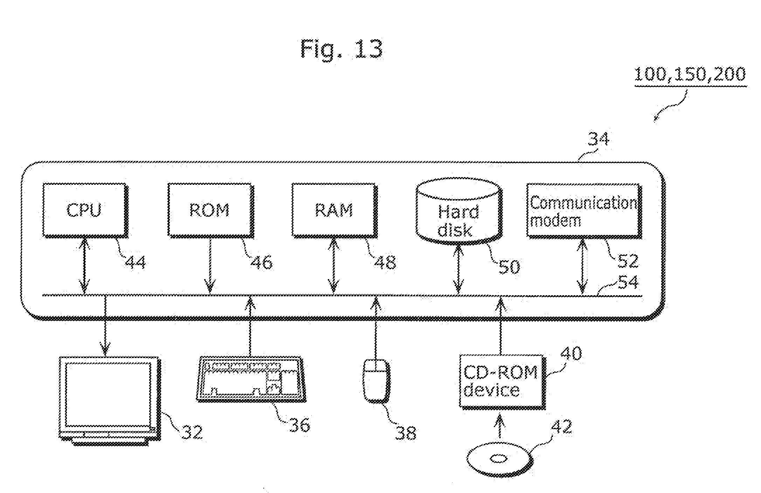

   Fig. 13 is a block diagram showing a hardware configuration of the computer system including any one of the display devices according to Embodiments 1 and 2 of the present invention.

### [Description of Embodiments]

Embodiments of the present invention are described below with reference to the drawings.

### [Embodiment 1]

A display device 100 according to Embodiment 1 of the present invention is described with reference to Fig. 1. Fig. 1 is a block diagram showing a structure of the display device according to Embodiment 1 of the present invention.

In Fig. 1, the display device 100 includes a broadcast receiving unit 101, a station selecting unit 102, a signal demultiplexing unit 103, an audio signal processing unit 104, a video signal processing unit 105, a text signal processing unit 106, an audio signal output unit 107, a video signal output unit 108, a display unit 109, an external-display detecting unit 111, an output destination switching unit 112, and an external-output unit 113.

It is to be noted that the blocks corresponding to the elements of the display device 100 according to Embodiment 1 as shown in Fig. 1 of the present invention basically have the same functions as the blocks corresponding to the elements of a digital television receiving device 900 as shown in Fig. 11. More specifically, the broadcast receiving unit 101, the station selecting unit 102, the signal demultiplexing unit 103, the audio signal processing unit 104, the video signal processing unit 105, the text signal processing unit 106, the audio signal output unit 107, the video signal output unit 108, and the display unit 109 of the display device 100 respectively correspond to the broadcast receiving unit 901, the station selecting unit 902, the signal demultiplexing unit 903, the audio signal processing unit 904, the video signal processing unit 905, the text signal processing unit 906, the audio signal output unit 907, the video signal output unit 908 and the display unit 909 of the digital television receiving device 900.

Next, the correspondence between elements in the Claims and the aforementioned units in Embodiment 1 is shown below. A display unit corresponds to the video signal output unit 108 and the display unit 109. An external display device corresponds to the external display 150. A detecting unit corresponds to the external-display detecting unit 111 and the external-output unit 113. A display control unit corresponds to the output destination switching unit 112. A broadcast receiving unit corresponds to the broadcast receiving unit 101. A station selecting unit corresponds to the station selecting unit 102.

The broadcast receiving unit 101 receives an RF signal (broadcast signal), demodulates it into a digital signal, and outputs a control signal to the station selecting unit 102. Furthermore, the broadcast receiving unit 101 outputs the digital signal resulting from the demodulation to the signal demultiplexing unit 103.

The station selecting unit 102 determines identification information defined in a TS in order to identify a signal to be processed, based on the control signal input from the broadcast receiving unit 101. Furthermore, the station selecting unit 102 outputs the determined identification information to the signal demultiplexing unit 103.

The signal demultiplexing unit 103 demultiplexes the demodulated signal input from the broadcast receiving unit 101, based on the identification information input from the station selecting unit 102, so as to extract an audio signal, a video signal, a text signal representing text etc. that is for communicating additional information other than the audio and video data (hereinafter, the text signal is also referred to as an additional information signal), and outputs the extracted signals to the output destination switching unit 112.

The external-display detecting unit 111 detects whether or not an external display is connected to the external-output unit 113 of the display device 100, and outputs the result (connection information) to the output destination switching unit 112.

The output destination switching unit 112 (i) detects which one of the audio signal processing unit 104, the video signal processing unit 105, the text signal processing unit 106, and the external-output unit 113 are the output destinations of the respective audio signal, video signal, and text signal demultiplexed and input by the signal demultiplexing unit 103, according to the connection information, the classifications that have been set at the time of distribution from a factory, the classifications re-set by a viewer, and information about the display capability of the external display 150 that is notified from an external-display detecting unit 111 that will be described later (the information about the display capability is, for example, the information indicating what type of a signal can be displayed, and is hereinafter referred to as functional information), and (ii) outputs the respective signals to the detected output destinations.

In the case where an external display is connected to the display device at this time, the output destination switching unit 112 may output a signal to the external-output unit 113, based on the connection information of the external display obtained from the external-display detecting unit 111.

Here, possible classifications at the time of the distribution from the factory are indicated below.

As one such possibility, assuming that text signals are classified into subtitle signal, emergency signal, advertisement signal etc., Class A is set as a class for simultaneously displaying the classified signals such that the classified signals are reliably multiplexed as a video signal and Class B is set as a class for the other kinds of display.

On the other hand, the classifications re-set by the viewer are classifications that have been modified intentionally by the viewer from the classifications at the time of the distribution from the factory.

The audio signal processing unit 104 processes the audio signal input by the output destination switching unit 112 to generate an analog audio signal. The analog audio signal is output as a sound from the audio signal output unit 107.

The video signal processing unit 105 processes the video signal input by the output destination switching unit 112 to generate an analog video signal, and then outputs it to the video signal output unit 108.

The text signal processing unit 106 processes the text signal input by the output destination switching unit 112 to generate an analog video signal, and then outputs it to the video signal output unit 108.

The video signal output unit 108 multiplexes the analog video signals respectively input by the video signal processing unit 105 and the text signal processing unit 106 (in other words, synthesizes these signals such that videos represented by the signals are superimposed), and outputs the multiplexed analog video signal to the display unit 109 where the signal is displayed.

The external-output unit 113 outputs the signal input by the output destination switching unit 112 to the external display 150 connected to the external-output unit 113.

The external-display detecting unit 111 obtains the functional information of the external display 150 connected to the external-output unit 113 according to a predetermined method, and notifies the obtained functional information to the output destination switching unit 112. In this way, the output destination switching unit 112 can recognize the display capability of the external display 150, and thus can change the type of the target signal to be output to the external display 150 according to the capability.

For example, in the case where an external display capable of outputting video signals is connected to the external-output unit 113 instead of an external display incapable of outputting video signals, the output destination switching unit 112 can add video signal as a new signal type of target signals to be output although video signals have not been output to the external display so far.

In other words, the output destination switching unit 112 can display a necessary signal in a more reliable manner, by detecting whether or not a signal demultiplexed by the signal demultiplexing unit 103 and input to the output destination switching unit 112 is a target signal to be output to the external-output unit 113, based on the functional information of the external display 150 notified by the external-display detecting unit 111.

As an example of the predetermined method for obtaining the functional information of the external display 150, it is possible to implement a method suitable for a connection I/F (Interface) of the external display 150.

For example, when a connection is established using the IP (Internet Protocol) network, it is possible to obtain the functional information of the external display 150 from the external-display detecting unit 111 through IP communication.

Next, with reference to Figs. 2 and 3, descriptions are given of how a signal to be multiplexed on a main signal (the signal to be multiplexed is hereinafter referred to as a sub-signal) is displayed in the display device 100 configured as described above, in each of the cases where the external display 150 is not connected and is connected to the display device.

The following description is given taking a specific example where the main signal is a video signal for displaying a video and the sub-signal is an emergency signal for displaying an emergency message (regarding the details of an emergency status, damage information, evacuation instructions etc.).

Fig. 2 is a diagram showing an exemplary display in the case where the external display 150 is not connected to the display device 100 according to Embodiment 1 of the present invention. On the other hand, Fig. 3 is a diagram showing an exemplary display in the case where the external display 150 is connected to the display device 100 according to Embodiment 1 of the present invention.

As shown in Fig. 2, when the external display 150 is not connected to the display device 100, such an emergency message is displayed on the display unit 109 of the display device 100 such that the emergency message hides or affects a part of the video of a video program that the viewer would like to view.

In contrast, as shown in Fig. 3, when the external display 150 is connected to the display device 100, such an emergency message is displayed on the external display 150. Accordingly, the video of the video program that the viewer would like to view is displayed on the display unit 109 of the display device 100 without being hidden or affected by the emergency message.

As shown in both the cases in Figs. 2 and 3, the emergency message is reliably displayed on one of the displays irrespective of whether or not the external display 150 is connected to the display device 100.

Next, an operation procedure taken by the external-display detecting unit 111 of the display device 100 according to Embodiment 1 of the present invention is described with reference to Fig. 4.

Fig. 4 is a flowchart of the operation procedure taken by the external-display detecting unit 111 of the display device 100 according to Embodiment 1 of the present invention.

In Fig. 4, the external-display detecting unit 111 starts detecting a connection of the external display 150 (S401). At this time, the value of a connection state management variable is set to indicate "Not connected" that is the initial state.

The external-display detecting unit 111 detects whether or not the external display 150 is connected to the display device after the start of detecting the connection of the external display 150 (S402).

In Step S402, when the external-display detecting unit 111 detects that the external display 150 is connected thereto (Yes in Step S402), the external-display detecting unit 111 detects whether or not the value of the connection state management variable indicates "Not connected" (S403).

In Step S403, when the external-display detecting unit 111 detects that the external display 150 is connected thereto (Yes in Step S402), the external-display detecting unit 111 changes the value of the connection state management variable to indicate "Connected", outputs the value (indicating "Connected") of the connection state management variable to the output destination switching unit 112, and returns to Step S402 (S404).

In Step S403, when the external-display detecting unit 111 detects that the value of the connection state management variable does not indicate "Not connected" (No in Step S403), the external-display detecting unit 111 returns to Step S402.

On the other hand, in Step S402, when the external-display detecting unit 111 detects that the external display 150 is not connected thereto (No in Step S402), the external-display detecting unit 111 detects whether or not the value of the connection state management variable indicates "Not connected" (S405).

In Step S405, when the external-display detecting unit 111 detects that the value of the connection state management variable indicates "Not connected" (No in Step S405), the external-display detecting unit 111 returns to Step S402.

In Step S405, when the external-display detecting unit 111 detects that the value of the connection state management variable does not indicate "Not connected" (No in Step S405), the external-display detecting unit 111 changes the value of the connection state management variable to indicate "Not connected", outputs the value (indicating "Not connected") of the connection state management variable to the output destination switching unit 112, and returns to Step S402 (S406).

It is to be noted that the external-display detecting unit 111 may have a function of obtaining the functional information of the external display 150 connected thereto.

In the case where the external-display detecting unit 111 has such a function, the external-display detecting unit 111 may be configured to process the obtained functional information of the external display 150 into, for example, an output format association table for the external display 150 as shown in Fig. 7, associates each of the formats with a value of a connection state management variable, and outputs the associated value to the output destination switching unit 112 in Step S404 shown in Fig. 4. Alternatively, the external-display detecting unit 111 may output, to the output destination switching uni112, the information indicating whether or not the external display is connected thereto and the functional information of the external display 150 as they are when obtained, and the output destination switching unit 112 may perform necessary processing on the information.

This embodiment is described taking as an example of a procedure according to which the external-display detecting unit 111 always checks whether or not the external display 150 is connected thereto. However, other procedures are possible. For example, the external-display detecting unit 111 may check a connection at a predetermined interval. Furthermore, those skilled in the art will readily appreciate that it is possible to implement the present invention by employing the procedure including (i) generating a signal corresponding to a connection or a disconnection of the external display 150, (ii) causing the external-display detecting unit 111 to obtain the signal, and (iii) updating a current state between a connection state and non-connection state of the external display 150.

Next, with reference to Fig. 5, a description is given of an operation procedure taken by the output destination switching unit 112 of the display device 100 according to Embodiment 1 of the present invention in order to switch the output destinations additionally considering the display capability of the external display 150.

Fig. 5 is a flowchart of an operation procedure taken by the output destination switching unit 112 of the display device 100 according to Embodiment 1 of the present invention in order to switch output destinations additionally considering the display capability of the external display.

First, the output destination switching unit 112 obtains signals output by the signal demultiplexing unit 103 (S501). The respective resulting signals have already been generated when the signal demultiplexing unit 103 has demultiplexed a multiplexed signal, and thus it is possible to identify, for each signal, the information type of the information included in the signal.

For example, in the case of an MPEG-2 transport stream, it is possible to identify the information type of each input signal, based on the program ID (PID: Program Identification). In this example taken here, signals that are received by the broadcast receiving unit 101 represent MPEG-2 transport streams.

Upon receiving each of the signals output by the signal demultiplexing unit 103, the output destination switching unit 112 detects whether or not the value of a connection state management variable of each signal obtained by the external-display detecting unit 111 indicates "Connected" (S502).

More specifically, the external-display detecting unit 111 outputs a connection detection signal to the external display 150 via the external-output unit 113 in order to detect the connection state of the external display 150. Upon receiving an input of the connection detection signal, the external display 150 outputs, to the external-output unit 113, such a response signal that indicates that the external display 150 is currently being connected to the display device 100. This response signal is output from the external-output unit 113 to the external-display detecting unit 111.

Upon receiving the response signal, the external-display detecting unit 111 sets the value of the connection state management variable of each signal to indicate "Connected". On the other hand, in the case where no response signal is returned in response to the connection detection signal, the external-display detecting unit 111 sets the value of the connection state management variable of each signal to indicate "Not connected". Communication processes between the external-display detecting unit 111 and the external-output unit 113 are described in detail later.

Next, in Step S502, when the value of the connection state management variable of each signal is determined to indicate "Connected" (Yes in Step S502), the output destination switching unit 112 detects whether or not the input signal input by the signal demultiplexing unit 103 is a target signal to be output outside (S503).

In Step S503, in the case where the output destination switching unit 112 detects that the input signal input by the signal demultiplexing unit 103 is a target signal to be output outside (Yes in Step S503), the output destination switching unit 112 outputs the input signal to the external-output unit 113. Furthermore, in the case where the external-output unit 113 receives a signal indicating the output format of one of the input signals input from the output destination switching unit 112 needs to be converted, the external-output unit 113 converts the output format based on the signal, and outputs the information of the signal on the external display 150.

On the other hand, in the case where the output destination switching unit 112 detects that each of the input signals is not a target signal to be output outside (No in Step S503), and in the case where the value of the connection state management variable of each signal does not indicate "Connected" (No in Step S502), the output destination switching unit 112 outputs each of the input signals to a corresponding one of the audio signal processing unit 104, the video signal processing unit 105, and the text signal processing unit 106 which are the output destinations inside the display device 100 (S505).

Next, with reference to Figs. 6 and 7, a description is given of a method performed by the output destination switching unit 112 in order to detect whether or not an obtained signal is a target signal to be output outside, taking an example of using an output destination switching table in the aforementioned Step S503.

Fig. 6 is a diagram showing an exemplary output destination switching table that is used by the output destination switching unit 112 according to Embodiment 1 of the present invention in order to detect whether or not the obtained signal is a target signal to be output outside.

The output destination switching unit 112 stores, in advance, the output destination switching table as shown in Fig. 6, in a built-in nonvolatile storage area (such as a ROM (Read Only Memory) and a NVRAM (Nonvolatile RAM (Random Access Memory)). It is to be noted that the display device 100 may be configured to allow the viewer to modify this output destination switching table.

Fig. 7 is a diagram showing exemplary functional information according to Embodiment 1 of the present invention. The columns for "Output formats" in Fig. 7 specify output formats (such as a character code or a message ID) specified in the columns for "Necessity of conversion for output" in the output destination switching table in Fig. 6. The availability of the external display ("Supported" or "Not supporter") in association with each of the output formats specified in the columns for "Output formats" are shown in the columns for "Support by external display".

The output destination switching unit 112 firstly determines the information type identified by the PID of each of the signals input by the signal demultiplexing unit 103, and then searches the columns for "Information type" of the output destination switching table in order to detect whether or not the identified information type of each of the signals is registered in any of the columns for "Information types". In the case where the information type of any one of the signals is registered in any of the columns for "Information type" in the output destination switching table, the output destination switching unit 112 detects that the signal is a target signal to be output outside (in other words, the result of determination in Step S503 in Fig. 5 is Yes). Although the output destination switching table registering only signals to be output to an external display is used in the above-described method, it is also possible to use an output destination switching table explicitly registering also signals that are not the target signals to be output to an external display.

Furthermore, the output destination switching unit 112 may further determine the necessity of conversion of output formats, with reference to the columns for "Necessity of conversion for output" associated with the respective information types of the input signals. In this case, in the case where the output destination switching unit 112 detects that the output format of any of the signals needs to be converted, the output destination switching unit 112 outputs, in Step S504, a signal indicating the necessity to the external-output unit 113 such that the signal is associated with the signal input by the signal demultiplexing unit 103.

For example, an emergency message B shown in Fig. 6 is specified as "Necessary" in the associated column for "Necessity of conversion for output", the output destination switching unit 112 outputs, to the external-output unit 113, a signal indicating that the output format needs to be converted from the message ID to a character code such that the signal is associated with the input signal indicated as being the emergency message B by its information type.

The output destination switching unit 112 may further detect whether or not the signal can be output to the external-output unit 113, based on, for example, the functional information of the external display 150 as shown in Fig. 7.

In this case, the output destination switching unit 112 firstly obtains the functional information from the external-display detecting unit 111. For example, the functional information is obtained in the form of a table as shown in Fig. 7 (the table is referred to as an association table for output formats supported by the external display).

Next, the output destination switching unit 112 detects whether or not the external display 150 supports the output formats of the signals input by the signal demultiplexing unit 103 (if the output format of any of the signals needs to be converted, the output format after the conversion).

In the case where the output destination switching unit 112 detects that the external display 150 supports the output formats of the signals, it determines that the signals are target signals to be output outside.

Next description is given of a procedure taken by the external-display detecting unit 111 to detect a connection of the external display 150 to the external-output unit 113 and to obtain the functional information.

Fig. 8 is a block diagram showing the functional blocks of the external display 150.

As shown in Fig. 8, the external display 150 includes a display unit 151, a communication unit 152, and a control unit 154.

The display unit 151 displays the information of the video signal obtained from the external-output unit 113 via a communication path 160. More specifically, a CRT (Cathode Ray Tube), a liquid crystal display, a plasma display are possible as the display unit 151, any other display device that allows visual recognition of the video is possible.

The communication path 160 may be a communication path for a wired communication or a communication path for a wireless communication using wireless LAN (Local Area Network) or the like.

The communication unit 152 obtains a control signal output by the external-output unit 113 via the communication path 162. The control signal here is a signal that the external-output unit 113 outputs to the external display 150 in order to enable the external-display detecting unit 111 to detect a connection of the external display 150 and the functional information of the external display 150.

In response, the communication unit 152 outputs a response signal from a control unit 154 that is described later to the external-output unit 113 via the communication path 162.

The communication path 162 may be in accordance with any other non-IP communication protocol, although either a wired LAN or a wireless LAN is assumed to be used in the case where the control signal and the response signal are communicated using IP.

In response to the transfer of the control signal from the communication unit 152, the control unit 154 generates the response signal and outputs it to the communication unit 152.

The control signal is at least one of (i) a connection detection signal for enabling the external display 150 to detect whether or not the external device is connected to the external-output unit 113, and (ii) a query for display capability that is used to obtain the functional information.

The external display 150 outputs, to the external-output unit 113, such a response signal that indicates that the external display 150 is currently being connected to the display device 100, in response to the connection detection signal as in the above item (i).

The external display 150 outputs, to the external-output unit 113, the functional information as a response signal to the query for display capability as in the above item (ii). Specific examples of the functional information of the external display 150 include: (A) information indicating whether or not character codes (represented by ASCII (American Standard Code for Information Interchange) and Unicode) can be decoded and output; (B) information indicating whether or not a pre-defined message ID can be converted into a character string or an image (including an animation image) having meaning recognizable by the viewer and then can be displayed; and (C) information indicating whether or not a file that requires a particular execution engine such as an SWF (Small Web Format or Shockwave Flash) can be reproduced. The functional information may further include information indicating the resolution of the display device required to appropriately display the display information, in addition to the type of the display information of the above-described signal.

Fig. 9 is a flowchart of processes performed by the external display 150 according to Embodiment 1 of the present invention.

First, the communication unit 152 monitors a communication I/F with the external-output unit 113, and detects whether or not a control signal output by the external-output unit 113 has already been input to the communication unit 152 (S910). In the case where the control has not yet been input (No in S910), the communication unit 152 continues the monitoring.

In the case where the control signal has already input to the communication unit 152 (Yes in S910), the communication unit 152 outputs the input control signal to the control unit 154.

Next, the control unit 154 detects whether or not the input control signal is a connection detection signal as mentioned above (S912). When the input control signal is found to be such a connection detection signal as a result of the determination (Yes in S912), the control unit 154 outputs a response signal indicating a connection to the external-output unit via the communication unit 152.

On the other hand, when the input control signal is found not to be such a connection detection signal as a result of the determination (No in S912), the control unit 154 detects whether or not the control signal is a query for display capability as described earlier (S916). When the control signal is found to be the query for display capability as a result of the determination (Yes in S916), the control unit 154 outputs a response signal including the functional information to the external-output unit 113 via the communication unit 152 (S918).

As described earlier, the functional information includes, for example, information shown in Fig. 7. More specifically, the functional information may be text information or binary information coded using a predefined code. Alternatively, the functional information may be information etc. for determining the output format pre-defined between the display device 100 and the external display 150, based on the model number specified in an association table. Accordingly, the functional information means information represented in the form that allows the output destination switching unit 112 in the display device 100 to recognize the display capability of the external display 150.

Here, the communication unit 152 may monitor a reception status of a control signal from the external-output unit 113 constantly in a asynchronous manner. However, considering electric power saving, the communication unit 152 may monitor a reception status of a control signal from the external-output unit 113 basically at a predetermined regular time interval such as per minute, while increasing the number of times of monitoring only during a particular time period from a time point at which any button on the external display 150 is pressed by the viewer.

Furthermore, the external display 150 may further include an electric power source control unit for switching a normal conductive state and a standby state (electric power saving state).

In this case, a continued supply of electric power to the communication unit 152 during a standby state allows the electric power source control unit to perform control for switching from the standby state to a normal conductive state, triggered by an input of a control signal to the communication unit 152. Alternatively, the electric power source control unit may perform control for switching to, for example, a second standby state for supplying electric power only to the communication unit 152 and the control unit 154, triggered by an input of a control signal.

Here, the display device 100 according to this embodiment includes: a display unit which displays a target signal including a video signal and an additional information signal (the display unit corresponds to the video signal output unit 108 and the display unit 109); a detecting unit which detects whether or not an external display device (external display 150) is connected to the display device (the detecting unit corresponds to the external-display detecting unit 111 and the external-output unit 113); and a display control unit which causes the external display device to display a part of the target signal when the detecting unit detects that the external display device is connected thereto (the display control unit corresponds to the output destination switching unit 112).

In addition, the display control unit causes the external display device to display the additional information signal included in the target signal when the detecting unit detects that the external display device is connected thereto.

In addition, the detecting unit obtains the functional information indicating the type of signals that can be displayed by the connected external display device, whereas the display control unit causes the external display device to display the part of the target signal, based on the functional information. Here, the detecting unit obtains the functional information from the external display device.

In addition, the display control unit detects whether or not each of the signals included in the target signal is indicated in the functional information, and causes the external display device to display the signal found to be included therein by the detection.

When the detecting unit detects that no external display device is connected, the display control unit causes the display unit to display the target signal.

The display device 100 may further include a station selecting unit for outputting identification information for demultiplexing a video signal and an additional information signal.

The external display 150 according to this embodiment includes a display unit 151, a communication unit 152, and a control unit 154. The communication unit 152 outputs a control signal to the control unit 154 and outputs, to the display device 100, a response signal in response to the control signal output by the control unit 154, upon receiving, from the display device 100, a control signal which is one of (a) a connection detection signal for detecting whether or not the display device 100 is currently being connected to the external display 150 and (b) a query for display capability for obtaining the functional information indicating the type of the target signal that can be displayed on the external display 150. In a first case where the control signal is a connection detection signal, the control unit 154 outputs, to the communication unit 152, a response signal indicating that the external display device 150 is currently being connected to the display device 100. In a second case where the control signal is a query for display capability, the control unit 154 outputs, to the communication unit 152, a response signal indicating the functional information.

As described above, with the display device 100 according to Embodiment 1 of the present invention, in the case of utilizing an external display that can be selectively connected and disconnected to the display device by the viewer, it is possible to output a necessary signal to the optimum one of the display unit 109 of the display device 100 and the external display 150, depending on whether or not the external display 150 is connected to the display device 100, and causes the optimum one to display the information of the necessary signal, without re-setting the setting each time of a connection or a disconnection of the external display.

In other words, it is possible to display the additional information signal (for example, a subtitle signal, an emergency signal, an advertisement signal, etc.), without affecting the video of a video program that is currently being viewed on the display unit 109.

In other words, under the circumstances where the external display 150 can be utilized, the user can view the video of the video program that the viewer would like to view in the original video display size without letting the information of the subtitle signal and the emergency signal hide the desired video even when the information is displayed. In addition, it is possible to automatically display the subtitle signal and the emergency signal on the display unit 109 of the display device 100 without requiring the viewer to re-set the setting of the display device 100 even when the external display 150 is detached from the display device 100. This enhances the convenience for the viewer. Furthermore, the viewer can view the necessary display such as the emergency signal in a reliable manner.

More specifically, even when the external display 150 is detached from the display device 100, the function of the output destination switching unit 112 makes it possible to automatically display the subtitle signal and the emergency signal on the display unit 109 of the display device 100 without requiring the viewer to re-set the setting of the display device 100.

Furthermore, although the display capabilities of external displays 150 vary depending on the types of the external displays 150, the output destination switching unit 112 is capable of flexibly adjusting the difference in the display capability according to the type of the external display 150 and selects the output destination(s) of the signals that should be displayed on one of the display device 100 and the external display 150, and thereby controlling the display of the information of the signals.

In this embodiment, as shown in Fig. 5, only the signal(s) for which Yes is the answer both in Step S502 and Step S503 is/are output to the external-output unit 113, and the other signal(s) is/are output to the output destination(s) inside the display device 100. However, there is no need to always employ this configuration. The same advantageous effect can be obtained as long as the signal(s) for which Yes is the answer both in Step S502 and Step S503 is/are output at least to the external-output unit 113. Accordingly, at least one of the signal(s) for which Yes is the answer both in Step S502 and Step S503 may be output to at least one of the audio signal output unit 107 and the video signal output unit 108 of the display device 100 via the audio signal processing unit 104, the video signal processing unit 105, the text signal processing unit 106, etc. of the display device 100. Alternatively, at least a part/one of the signal(s) for which No is the answer both in Step S502 and Step S503 may be output to the external-output unit 113.

It is to be noted that the display device 100 may include only the video signal output unit 108, the display unit 109, the external-display detecting unit 111, the external-output unit 113, and the output destination switching unit 112, and thus may not include the other constituent elements in Fig. 1.

For example, the output destination switching unit 112 may receive a demodulated signal via a wired or wireless communication, from another receiving device including a broadcast receiving unit 101, a station selecting unit 102, and a signal demultiplexing unit 103, instead of receiving it from the display device 100.

Assuming that only a video signal is received, the display device 100 may not include an audio signal processing unit 104, an audio signal output unit 107, and a text signal processing unit 106.

In another case where the display unit 109 is capable of receiving an input of a digital signal, the display device 100 may not include a video signal processing unit 105.

As described above, the display device 100 can provide the same advantageous effects obtainable in the case where it is configured to include all of the recited constituent elements, even in the case of including only the video signal output unit 108, the display unit 109, the external-display detecting unit 111, the external-output unit 113, and the output destination switching unit 112, and thus is configured not to include the remaining constituent elements.

### (Embodiment 2)

A display device 200 according to Embodiment 2 of the present invention is described with reference to Fig. 10. Fig. 10 is a block diagram showing a structure of the display device according to Embodiment 2 of the present invention.

In Fig. 10, among the constituent elements (blocks) in the display device 200, the constituent elements that basically have the same functions as those of the counterpart constituent elements (blocks) in the display device 100 according to Embodiment 1 of the present invention in Fig. 1 are assigned with the same reference signs, and detailed descriptions thereof are not repeated here.

The display device 200 includes a broadcast receiving unit 101, a signal demultiplexing unit 103, an audio signal processing unit 104, a video signal processing unit 105, a text signal processing unit 106, an audio signal output unit 107, a video signal output unit 108, a display unit 109, an external-display detecting unit 111, an output destination switching unit 112, an external-output unit 113, an electric power source control unit 201, and a station selecting unit 202.

The display device 200 is different from the display device 100 in the point that a result of detecting an external display by the external-display detecting unit 111 is input also to the station selecting unit 202 in addition to the output destination switching unit 112, and the point that the electric power source control unit 201 is added thereto.

Here, the correspondence between elements in the Claims and the aforementioned units in Embodiment 2 is shown below. A display unit corresponds to the video signal output unit 108 and the display unit 109. An external display device corresponds to the external display 150. A detecting unit corresponds to the external-display detecting unit 111 and the external-output unit 113. A display control unit corresponds to the output destination switching unit 112. A broadcast receiving unit corresponds to the broadcast receiving unit 101. A station selecting unit corresponds to the station selecting unit 202. The electric power control unit corresponds to the electric power source control unit 201 and the station selecting unit 202.

In general, the electric power consumption is the greatest in a video signal output unit including the display unit in a display device. The display device 200 in Embodiment 2 of the present invention can provide an electric power saving effect by avoiding electric power supply to the video signal output unit 108 and the display unit 109 when no video program is viewed.

Examples of the constituent elements (blocks) that are not required to operate when no video program is viewed includes the audio signal processing unit 104, the video signal processing unit 105, the text signal processing unit 106, the audio signal output unit 107, etc. In Embodiment 2 of the present invention, the electric power source control unit 201 allows control of supply/non-supply of electric power to these constituent elements (blocks).

Next, a description is given of operations performed by the display device 200 configured as described above.

The external-display detecting unit 111 detects whether or not the external display 150 is connected, and outputs the result to the output destination switching unit 112 and also to the station selecting unit 202.

The electric power source control unit 201 manages a conductive state that indicates either a standby state (electric power saving state) or a normal conductive state of the display device 200. Furthermore, in response to an instruction from the station selecting unit 202, the electric power source control unit 201 controls "Supplied" or "Not supplied" ("Supplied": normal conductive state, "Not supplied": standby state) of electric power to the audio signal processing unit 104, the video signal processing unit 105, the text signal processing unit 106, the audio signal output unit 107, and the video signal output unit 108. Furthermore, in response to a query for conductive state from the station selecting unit 202, the electric power source control unit 201 detects whether the display device 200 is in a normal conductive state or in a standby state, and gives a response.

The station selecting unit 202 determines identification information defined in a TS in order to identify a signal that should be processed, based on the control signal input from the broadcast receiving unit 101. Next, the station selecting unit 202 outputs the determined identification information to the signal demultiplexing unit 103. In a particular case where the identification information includes information (for example, a flag or the like) indicating that a signal that should be processed is an emergency message or the like, the station selecting unit 202 asks the electric power source control unit 201 about the current conductive state in the display device 200.

As a result, when the electric power source control unit 201 detects that the display device 200 is in a standby state, the station selecting unit 202 obtains information indicating the connection state indicating whether or not the external display 150 is connected to the display device 200, from the external-display detecting unit 111.

As a result, when the external-display detecting unit 111 detects that the external display 150 is not connected to the display device 200, the station selecting unit 202 issues, to the electric power source control unit 201, an instruction for switching from the standby state to a normal conductive state.

As a result, the electric power source control unit 201 switches the conductive state from the standby state to a normal conductive state.

On the other hand, the electric power consumed by the external display 150 is considered to be comparatively smaller than the electric power consumed by the display device 200 due to the difference in the dimensions (size) of the display screen and in the display performance, etc.

For this reason, even when the conductive state is a standby state when an emergency signal is received, when the external-display detecting unit 111 has already detected a connection of the external display 150, the station selecting unit 202 allows the electric power source control unit 201 to maintain the standby state by skipping issuing an instruction for switching to a normal conductive state to the electric power source control unit 201.

In this case, the emergency signal demultiplexed by the signal demultiplexing unit 103 is output to the external-output unit 113 by the output destination switching unit 112, and is displayed on the external display 150.

Here, the display device 200 according to this embodiment further include an electric power source control unit 201 which detects a current conductive state that is either (a) a normal conductive state where electric power is supplied normally and (b) a standby state where electric power is supplied to the detecting unit and the display control unit, but the amount of the supplied electric power is smaller than the electric power supplied in the normal conductive state. When the electric power source control unit 201 detects that the current conductive state is a standby state and the detecting unit detects that the external display device is connected, the display control unit displays the information of the additional information signal on the external display.

Alternatively, the electric power control unit may switch the conductive state from the standby state to a normal conductive state when the station selecting unit 202 detects that the identification information includes information indicating that the additional information signal is an emergency signal, the electric power source control unit 201 detects that the current conductive state is the standby state, and the detecting unit detects that the external display device is not connected.

This configuration enables an immediate display when the external display 150 is connected even when it takes long time for the display device 200 to transit from the standby state to a normal conductive state in which the emergency message etc. can be displayed. Furthermore, it is possible to suppress the amount of electric power consumption by preferentially utilizing the external display 150 that generally consumes less electric power.

Alternatively, it is also possible to determine whether or not to preferentially use the external display 150 by comparing the electric power consumption of the external display 150 obtained in advance according to a predetermined method and the electric power consumption of the display device 200 held in advance according to a predetermined method. For example, it is possible to determine preferential use of the external display 150 only when the electric power consumption of the external display 150 is smaller than the electric power consumption of the display device 200.

As described above, the display device 200 according to Embodiment 2 of the present invention makes it possible to achieve saving of electric power and immediate display of an emergency signal when the external display 150 is connected thereto, in addition to providing the advantageous effect provided by the display device 100 according to Embodiment 1 of the present invention.

Furthermore, the display device 200 prevents the viewer from missing display of the information of an essential signal such as an emergency signal etc. irrespective of the connection state of the external display (either a connection state or a disconnection state), and further enhances the convenience for the viewer.

Embodiments 1 and 2 have been described taking an example where the output destination switching unit 112 is an independent processing unit that collectively receives signals output by the signal demultiplexing unit 103. However, it is clear that the same advantageous effects can be obtained in the case where three independent processing units that function similarly to the output destination switching unit 112 are configured to receive corresponding demultiplexed audio, video, and text signals and output the respectively corresponding signals while appropriately switching the output destinations of the respective signals.

In this case, the function for switching the output destinations may be provided for all of the independent three processing units, or may be provided only for the processing unit(s) which may receive an input of a signal that is output to the external-output unit 113. However, those skilled in the art will readily appreciate that a processing unit having the function for switching output destinations needs to receive an input of the value of a connection sate management variable from the external-display detecting unit 111.

Although Embodiments 1 and 2 have been described taking an example case where the broadcast receiving unit 101 receives broadcast waves, these embodiments are not limited to the example. For example, a case of receiving only data output by multi-cast communication using an IP communication path is also possible. In this case, however, it is required to provide a communication data receiving unit (corresponding to the broadcast receiving unit 101) which demodulates communication data transmitted by multi-cast communication into a digital signal.

Although Embodiments 1 and 2 have been described taking an example case where a video signal that is a main signal and an additional information signal that is a sub-signal are multiplexed and transmitted through the same transmission path, these embodiments are not limited to the example. For example, the present invention is applicable to a configuration in which the video signal that is the main signal is received through a broadcast wave and the additional information signal that is the sub-signal is received via an IP communication path. In this case, the broadcast receiving unit 101 also has a function of receiving signals from the IP communication path, in addition to a function of receiving broadcast waves.

Although Embodiments 1 and 2 have been described taking an example case of employing a signal multiplexing method using TSs that are widely used in digital broadcasting, these embodiments are not limited to the example. For example, PSs (Program Streams) may be used, or another multiplexing method may be used.

In the case of handling an emergency signal as an additional information signal, the emergency signal may include a message ID. In this case, the signal that is output on the external display 150 by the external-output unit 113 may be a raw message ID and the external display 150 may be configured to generate a character string indicating the message, based on the message ID. Alternatively, the external display 150 may be configured to generate a character string indicating the message, based on the message ID, and outputs the generated signal to the external display 150.

In addition, the external-output unit 113 may output the signal that has been subjected to predetermined processing to the external display 150. More specifically, when outputting the signal, the external-output unit 113 may perform, on the signal, a conversion process predetermined together with the external display 150. For example, a message ID may be converted into a character string. Examples of conversion conceivable in addition to the conversion into a character string includes a conversion into an instruction or the like for reproducing an animation that can be displayed on the external display 150.

Here, connection of the external display (external display device) 150 to one of the display device 100 and the display device 200 and is not limited to a connection by an HDMI (High-definition Multimedia Interface) for outputting signals from the one of the display device 100 and the display device 200, an Ethernet (registered) communication path that enables an IP communication etc., and any other I/F for outputting signals. In short, any means are possible as long as the means enables output of signals that should be output from the external-output unit 113 to the external display 150.

Although Embodiments 1 and 2 have been described taking an example case of employing a digital television receiving device as the display device 100 and the display device 200, those skilled in the art will readily appreciate that the same method can be used when an analog television receiving device performs the corresponding processes on multiplexed signals.

A typical application example of each of the display device 100 and the display device 200 according to Embodiments 1 and 2 is an exemplary case of handling a video signal as a main signal that is displayed on the display unit 109 of a corresponding one of the display device 100 and the display device 200 and handling, as a sub-signal, an additional information signal such as an emergency signal etc., that is multiplexed on the video signal and displayed. However, application examples are not limited to the exemplary case.

Other specific examples of possible sub-signals include a subtitle signal and an advertisement signal which are related to a video to be displayed, and signals which are not related to the video to be displayed. Furthermore, a video signal other than the main signal is possible, and application information that requires a user operation is also possible. More specifically, EPG information may be included therein.

In the case where each of the display device 100 and the display device 200 according to Embodiments 1 and 2 handles an advertisement signal as a sub-signal, it is effective that the external display 150 is configured to be incapable of deleting displayed information in order to reliably display the information of the advertisement signal on the external display 150 within the viewing field of the viewer. In this case, it is desirable that the external-display detecting unit 111 has a function for checking whether the external display 150 is an authentic product which is never been modified to be capable of deleting the display in an unauthorized manner. Another alternative is that the output destination switching unit 112 performs control for preventing a video signal from being displayed on one of the display devices 100 and 200 when the external display 150 is detached from the one of the display devices 100 and 200 or when the external-display detecting unit 111 detects that the external display 150 is in a non-display state.

Here, it is desirable that the advertisement signal can also be displayed on the external display 150 only in the case where the output destination switching unit 112 has successfully confirmed that the external display 150 is in a state that allows display of the subtitle signal and emergency signal.

A representative implementation example for handling signals such as a subtitle signal and an emergency signal as sub-signals is an exemplary case where a multiplexed signal includes a character code of a character that is used for display. In such a case, although the external-output unit 113 can decode the character code into an analog video signal and output the signal, outputting the raw character code simplifies the implementation in each of the display devices 100 and 200, and makes it possible to secure the originality in display by the external display 150.

Here, each of the display unit 109 and the external display 150 does not always need to display a video different from the video displayed by the other one. For example, the display unit 109 may display an additional information signal such as a text signal in addition to a video signal, and the external display 150 may display the video signal in addition to the additional information signal including the text signal.

More specifically, the signal(s) which is/are of a signal/signals (each referred to as a target signal hereinafter) including both of all the video signals and all the additional information signals and which is/are displayed on the display unit may be the signal(s) specified in one of the following eight patterns.

(1) All of the video signals or the whole video signal, and all of the additional information signals or the whole additional information signal
(2) All of the video signals or the whole video signal, and some of the additional information signals or the whole additional information signal
(3) Some of the video signals only or the whole video signal only
(4) Some of the additional information signals only or the whole additional information signal only
(5) Some of the video signals or the whole video signal, and some of the additional information signals or the whole additional information signal
(6) All of the video signals only or the whole video signal only
(7) All of the additional information signals only or the whole additional information signal only
(8) Some of the video signals or the whole video signal, and all of the additional information signals or the whole additional information signal

In each of the aforementioned eight patterns, the signal(s) to be displayed on the external display 150 is/are the signal(s) that remain(s) in the target signal after the signal(s) to be displayed on the display unit 109 is/are excluded. In addition, the signal(s) to be displayed on the external display 150 may further include any signal included in the target signal.

Here, an additional information signal may include an audio signal. In this case, the external display 150 reproduces the audio signal from a speaker device provided therein.

The control signal that is output from the external-output unit 113 of each of the display devices 100 and 200 may not include any display capability query for asking the functional information.

The display devices 100 and 200, and the external display 150 described in Embodiments 1 and 2 can be implemented as computers. As shown in Fig. 12, the display device includes a computer 34, a keyboard 36 and a mouse 38 for giving an instruction to the computer 34, a display 32 for presenting information such as a result of calculation by the computer 34, and a CD-ROM (Compact Disk Read-only Memory) device 40 for reading a program that is executed by the computer 34. The display device further includes a communication modem (not shown).

The program to be executed by the display device and the external display is recorded on a CD-ROM 42 that is a computer-readable medium, and is read out by the CD-ROM device 40. The program is otherwise read out by the communication medium 52 via a computer network.

Fig. 13 is a block diagram showing a hardware configuration of a computer system including the display devices 100 and 200, and the external display 150. The computer 34 includes a CPU (Central Processing Unit) 44, a ROM (Read Only Memory) 46, a RAM (Random Access Memory) 48, a hard disk 50, a communication modem 52, and a bus 54.

The CPU 44 executes the program read out via the CD-ROM device 40 or the communication modem 52. The ROM 46 stores the program and data necessary for the operations performed by the computer 34. The RAM 48 stores data such as parameters that are used when the program is executed. The hard disk 50 stores the program, data, etc. The communication modem 52 performs communication with the other computers via a computer network. The bus 54 mutually connects the CPU 44, the ROM 46, the RAM 48, the hard disk 50, the communication modem 52, the display 32, the keyboard 36, the mouse 38, and the CD-ROM device 40.

Furthermore, some of the constituent elements of the display device 100, the display device 200, and the external display 150 may be configured in the form of a signal system LSI (Large Scale Integrated Circuit). The system LSI is a super-multifunctional LSI manufactured by integrating the plural constituent elements on the single chip.

Furthermore, some of the constituent elements of the display device 100, the display device 200, and the external display 150 may be configured in the form of an IC card or an independent module that can be attached to or detached from any of the display device 100, the display device 200, and the external display 150. Each of the IC card and the module is a computer system including a microprocessor, a ROM, a RAM, etc. Each of the IC card and the module may include the aforementioned super-mulitifunctional LSI. Each of the IC card and the module exerts its functions when the microprocessor operates according to the computer program. Each of the IC card and the module may be tamper resistant.

Furthermore, the present invention may be implemented as the earlier-described display method. Furthermore, the method may be implemented as a computer program that is executed by a computer.

Furthermore, the present invention may be implemented as a computer-readable recording media having the computer program or the digital signal recorded thereon. Examples of such recording media include flexible disks, hard disks, CD-ROMs, MOs, DVDs, DVD-ROMs, DVD-RAMs, BDs (Blu-ray Disc (Registered)), USB memories, memory cards such as SD cards, semiconductor memories, etc.

In addition, the present invention in the form of the aforementioned computer program or digital signal may be transmitted via an electric communication circuit, a wired or wireless communication circuit, a network represented by the Internet, a data broadcasting, etc.

Furthermore, the present invention may be implemented as a computer system including a microprocessor and a memory, wherein the memory may store the computer program and the microprocessor may operate according to the computer program.

The program or the digital signal may be executed by another independent computer system after recorded on the recording medium and then transferred, or after transferred via the network etc.

Furthermore, the above-described embodiments and variation examples may be arbitrarily combined.

The embodiments disclosed herein are meant to be illustrative only and not limiting as to the scope of the present invention. Accordingly, the scope of the present invention is defined by the Claims not by the above disclosed descriptions, and therefore is to be given the full breadth of the Claims and any and all equivalents thereof.

### [Industrial Applicability]

A display device according to the present invention makes it possible to display an emergency signal such as an earthquake flash etc. on (i) digital television receiving devices which receive broadcast waves that transmit multiplexed signals in which video signals and additional information signals relating to the video signals are multiplexed or (ii) other kinds of receiving devices which receive communication data that is transmitted via an IP communication network, without affecting videos of the video programs that are currently being viewed by viewers. Furthermore, the viewers can view such an important signal in a reliable manner without being required to set setting or re-set the setting each time of a connection and a disconnection of the external display device. Thus, it is also possible to utilize a portable AV device as the external display.

### [Reference Signs List]

- 32: Display
- 34: Computer
- 36: Keyboard
- 38: Mouse
- 40: CD-ROM device
- 42: CD-ROM
- 44: CPU
- 46: ROM
- 48: RAM
- 50: Hard disk
- 52: Communication modem
- 54: Bus
- 100, 200: Display device
- 101, 901: Broadcast receiving unit
- 102, 902: Station selecting unit
- 103, 903: Signal demultiplexing unit
- 104, 904: Audio signal processing unit
- 105, 905: Video signal processing unit
- 106, 906: Text signal processing unit
- 107, 907: Audio signal output unit
- 108, 908: Video signal output unit
- 109, 151, 909: Display unit
- 111: External-display detecting unit
- 112: Output destination switching unit
- 113: External-output unit
- 150: External display
- 152: Communication unit
- 154: Control unit
- 160, 162: Communication path
- 201: Electric power source control unit
- 202: Station selecting unit
- 900: Digital television receiving device

## Claims

1. A display device comprising:
a display unit configured to display information represented by a target signal including (i) a video signal and (ii) an additional information signal;
a detecting unit configured to detect whether or not an external display device is connected to said display device; and
a display control unit configured to cause the external display device to display a part of the information represented by the target signal, when said detecting unit detects that the external display device is connected to said display device.

2. The display device according to Claim 1,
wherein said display control unit is configured to cause the external display device to display information represented by the additional information signal included in the target signal, when said detecting unit detects that the external display device is connected to said display device.

3. The display device according to Claim 1,
wherein said detecting unit is configured to obtain functional information indicating a type of a signal indicating information that can be displayed by the external display device connected to said display device, and
said display control unit is configured to cause the external display device to display the part of the information represented by the target signal, based on the functional information.

4. The display device according to Claim 3,
wherein said detecting unit is configured to obtain the functional information from the external display device.

5. The display device according to Claim 3,
wherein said display control unit is configured to detect whether or not each of the signals included in the target signal is indicated in the functional information, and, in the case where at least one of the signals is found to be indicated by the detection, cause the external display device to display information represented by the at least one signal found to be indicated by the detection.

6. The display device according to Claim 1,
wherein said display control unit is configured to cause said display unit to display information represented by the target signal, when said detecting unit detects that the external display device is not connected to said display device.

7. The display device according to any one of Claims 1 to 6, further comprising
a station selecting unit configured to output identification information for demultiplexing the video signal and the additional information signal from the target signal.

8. The display device according to Claim 7, further comprising an electric power source control unit configured to detect whether a current conductive state is either (a) a normal conductive state in which electric power is supplied normally or (b) a standby state in which electric power is supplied at least to said detecting unit and said display control unit, the electric power being less than the electric power in the normal conductive state,
wherein, in the case where:
said electric power control unit detects that the current conductive state is the standby state; and
said detecting unit detects that the external display device is connected to said display device,
said display control unit is configured to cause the external display device to display information represented by the additional information signal.

9. The display device according to Claim 8,
wherein, in the case where:
said station selecting unit detects that the identification information includes information indicating that the additional information signal is an emergency signal;
said electric power source control unit detects that the current conductive state is the standby state; and
said detecting unit detects that the external display device is not connected to said display device,
said electric power source control unit is configured to switch the current conductive state from the standby state to the normal conductive state.

10. The display device according to Claim 1,
wherein the additional information signal includes at least one of subtitle information, emergency information, and advertisement information.

11. The display device according to Claim 3,
wherein the functional information includes at least one of a character code, a message ID corresponding to a specific message defined in advance, and an SWF (Small Web Format or Shockwave Flash).

12. A display device which displays information represented by a target signal, comprising:
a display unit;
a communication unit; and
a control unit,
wherein, in the case where said communication unit obtains a control signal from another display device, said communication unit is configured to output the obtained control signal to said control unit, and output, to said other display device, a response signal corresponding to the control signal output from said control unit, the control signal being one of (a) a connection detection signal for detecting whether or not said display device is currently being connected to the other display device and (b) a query for display capability that is executed to obtain functional information indicating a type of a target signal representing information that can be displayed by said display device, and
said control unit is configured to:
output, as the response signal, a signal indicating that said display device is currently being connected to the other display device, to said communication unit, when the control signal is the connection detection signal; and
output the functional information as the response signal, to said communication unit, when the control signal is the query for display capability.

13. The display device according to Claim 12,
wherein the functional information includes at least one of a character code, a message ID corresponding to a specific message defined in advance, and an SWF (Small Web Format or Shockwave Flash).

## Amended claims

### Amended claims under Art. 19.1 PCT

**1.** Amended) A display device comprising:
a display unit configured to display information represented by a target signal including (i) a video signal and (ii) an additional information signal;
a detecting unit configured to detect whether or not an external display device is connected to said display device; and
a display control unit configured to cause the external display device to display a part of the information represented by the target signal, when said detecting unit detects that the external display device is connected to said display device,
wherein said detecting unit is configured to obtain functional information indicating a type of a signal indicating information that can be displayed by the external display device connected to said display device, and
said display control unit is configured to cause the external display device to display the part of the information represented by the target signal, based on the functional information.

**2.** The display device according to Claim 1,
wherein said display control unit is configured to cause the external display device to display information represented by the additional information signal included in the target signal, when said detecting unit detects that the external display device is connected to said display device.

**3.** Canceled)

**4.** Amended) The display device according to Claim 1,
wherein said detecting unit is configured to obtain the functional information from the external display device.

**5.** Amended) The display device according to Claim 1,
wherein said display control unit is configured to detect whether or not each of the signals included in the target signal is indicated in the functional information, and, in the case where at least one of the signals is found to be indicated by the detection, cause the external display device to display information represented by the at least one signal found to be indicated by the detection.

**6.** The display device according to Claim 1,
wherein said display control unit is configured to cause said display unit to display information represented by the target signal, when said detecting unit detects that the external display device is not connected to said display device.

**7.** Amended) The display device according to any one of Claims 1, 2, 4, 5, and 6, further comprising
a station selecting unit configured to output identification information for demultiplexing the video signal and the additional information signal from the target signal.

**8.** The display device according to Claim 7, further comprising
an electric power source control unit configured to detect whether a current conductive state is either (a) a normal conductive state in which electric power is supplied normally or (b) a standby state in which electric power is supplied at least to said detecting unit and said display control unit, the electric power being less than the electric power in the normal conductive state,
wherein, in the case where:
said electric power control unit detects that the current conductive state is the standby state; and
said detecting unit detects that the external display device is connected to said display device,
said display control unit is configured to cause the external display device to display information represented by the additional information signal.

**9.** The display device according to Claim 8,
wherein, in the case where:
said station selecting unit detects that the identification information includes information indicating that the additional information signal is an emergency signal;
said electric power source control unit detects that the current conductive state is the standby state; and
said detecting unit detects that the external display device is not connected to said display device,
said electric power source control unit is configured to switch the current conductive state from the standby state to the normal conductive state.

**10.** The display device according to Claim 1,
wherein the additional information signal includes at least one of subtitle information, emergency information, and advertisement information.

**11.** Amended) The display device according to Claim 1,
wherein the functional information includes at least one of a character code, a message ID corresponding to a specific message defined in advance, and an SWF (Small Web Format or Shockwave Flash).

**12.** Amended) A display device which displays information represented by a target signal, comprising:
a display unit;
a communication unit; and
a control unit,
wherein, in the case where said communication unit obtains a control signal from another display device that is the display device according to Claim 1, said communication unit is configured to output the obtained control signal to said control unit, and output, to said other display device, a response signal corresponding to the control signal output from said control unit, the control signal being one of (a) a connection detection signal for detecting whether or not said display device is currently being connected to the other display device and (b) a query for display capability that is executed to obtain functional information indicating a type of a target signal representing information that can be displayed by said display device, and
said control unit is configured to:
output, as the response signal, a signal indicating that said display device is currently being connected to the other display device, to said communication unit, when the control signal is the connection detection signal; and
output the functional information as the response signal, to said communication unit, when the control signal is the query for display capability.

**13.** The display device according to Claim 12,
wherein the functional information includes at least one of a character code, a message ID corresponding to a specific message defined in advance, and an SWF (Small Web Format or Shockwave Flash).
